# EUROPÄISCHE PATENTSCHRIFT

(11) **EP 0 961 079 B1**
(45) Veröffentlichungstag und Bekanntmachung des Hinweises auf die Patenterteilung: **23.10.2002**
(21) Anmeldenummer: 98810488.1
(22) Anmeldetag: 25.05.1998
(51) Int. Cl.: F23K 5/14, F16K 11/076

(54) **Anordnung zum wahlweisen Einleiten von Brennstoff und/oder Wasser in eine Brennkammer**
Device for selectively supplying fuel and/or water to a combustion chamber
Dispositif pour sélectionner l'admission d'eau et/ou de carburant dans une chambre de combustion

(43) Veröffentlichungstag der Anmeldung: 01.12.1999
(73) Patentinhaber: Alstom, 75116 Paris (FR)
(72) Erfinder: Meier, Frank, 8052 Zürich (CH)
(74) Vertreter: Liebe, Rainer

(56) Entgegenhaltungen:
- DE-U- 29 709 423
- US-A- 3 098 506
- US-A- 3 939 871
- US-A- 4 021 190

## Beschreibung

### TECHNISCHES GEBIET

Die vorliegende Erfindung bezieht sich auf das Gebiet der Verbrennungstechnik. Sie betrifft eine Anordnung zum wahlweisen Einleiten von Brennstoff und/oder Wasser in eine Brennkammer, insbesondere die Brennkammer einer Gasturbine, welche Anordnung Ventilmittel umfasst, mittels derer eine Brennstoffzuleitung für den Brennstoff und eine Wasserzuleitung für das Wasser wahlweise mit einer zur Brennkammer führenden gemeinsamen Brennkammerzuleitung verbindbar sind, oder die Brennstoffzuleitung und die Wasserzuleitung zur Spülung des Zuleitungssystems untereinander verbindbar sind, oder die Brennstoffzuleitung und die Wasserzuleitung einzeln absperrbar sind.

### STAND DER TECHNIK

Bei Gasturbinen, wie sie zur Erzeugung von elektrischer Energie in Kombikraftwerken oder dgl. eingesetzt werden, wird zur Erreichung günstiger Abgaswerte ("low-NOx") zunehmend dazu übergegangen, in die zugehörige Brennkammer zusammen mit dem Brennstoff (z.B. Naphta) Wasser einzudüsen, um die Temperatur in der Brennkammer herabzusetzen und so die Bildung der unerwünschten Stickoxide zu verhindern bzw. zu erschweren. Bei grossen Gasturbinen, wie sie beispielsweise von der Anmelderin hergestellt werden (z.B. vom Typ GT13E2), wird für die Verbrennung meist eine grosse, ringförmige Brennkammer verwendet, in der (ringförmig) eine Vielzahl von einzeln ansteuerbaren Brennern angeordnet sind. Für die Versorgung der Brenner mit dem Brennstoff und dem Wasser sind dabei jeweils auswechselbare Brennerlanzen vorgesehen, in deren Innerem Brennstoff und Wasser und ggf. auch ein Pilotgas von aussen zu den Brennern hingeführt werden. Brennstoff und Wasser können dabei in getrennten Leitungen geführt und getrennt eingedüst werden, oder bereits am Eingang der Lanze zu einer Emulsion vermischt werden, die dann in einer gemeinsamen Leitung weitergeführt wird (siehe dazu die DE-A1-44 01 097 der Anmelderin).

In allen Fällen sind die Brennerlanzen eingangsseitig jeweils über separate Zuleitungsventile an eine Brennstoffzuleitung und eine Wasserzuleitung angeschlossen, die zur Versorgung aller Lanzen ringförmig an den Lanzeneingängen (Lanzenköpfen) vorbeigeführt sind. Die Zuleitungsventile ermöglichen das Anund Abstellen einzelner Brenner und steuern zugleich das Mischungsverhältnis von Brennstoff zu Wasser. Ein weiteres Ventil, welches die beiden Zuleitungen untereinander verbindet, ermöglicht eine Spülung der Brennstoffzuleitung mittels Wasser aus der Wasserzuleitung. Zusätzlich ist an der Brennstoffringleitung ein Entlüftungsventil vorgesehen, durch welches beim Füllen der Ringleitung mit Brennstoff die im System befindliche Luft (oder das Wasser) entweichen kann.

Ein derartiges Brennstoffverteilsystem besitzt demnach eine Anzahl von Ventilen, die ein Vielfaches der Anzahl der Brenner bzw. Lanzen ausmacht. Da jedes dieser Ventile bewegliche Teile enthält, wächst mit der Zahl der Ventile neben den Anlagenkosten vor allem die Störanfälligkeit und der Wartungsaufwand. Darüber hinaus erfordert die einzelne Ansteuerung der Ventile eine komplizierte Verdrahtung und Steuerungslogik, wie z.B. in DE 29709423 U1 dargestellt. Mit einem wie in US 3 939 871 dargestellten Kombiventil Zur Steuerung eines Ölbrenners mit Dampfzerstäubung lässt sich die Anzahl der Ventile reduzieren, jedoch ermöglicht das dort dargestellte Kombiventil nicht die Schaltung aller erforderlichen, oben aufgeführten Leitungsverbindungen.

### DARSTELLUNG DER ERFINDUNG

Es ist daher Aufgabe der Erfindung, die Anordnung der eingangs genannten Art so weiterzuentwickeln, dass die Nachteile der bisherigen Anordnung vermieden werden, und sich insbesondere eine erhöhte Zuverlässigkeit und eine vereinfachte Steuerung ergibt.

Die Aufgabe wird bei einer Anordnung der eingangs genannten Art dadurch gelöst, dass die Ventilmittel ein Kombiventil umfassen, welches in wenigstens fünf verschiedene Ventilstellungen umschaltbar ist, wobei in der ersten Ventilstellung allein die Brennstoffzuleitung mit der Brennkammerzuleitung verbunden ist, in der zweiten Ventilstellung allein die Wasserzuleitung mit der Brennkammerzuleitung verbunden ist, in der dritten Ventilstellung die Brennstoffzuleitung und die Wasserzuleitung gleichzeitig mit der Brennkammerzuleitung verbunden sind, in der vierten Ventilstellung die Brennstoffzuleitung und die Wasserzuleitung untereinander verbunden und von der Brennkammerzuleitung getrennt sind, und in der fünften Ventilstellung die Brennstoffzuleitung und die Wasserzuleitung einzeln abgesperrt sind. Der Kern der Erfindung besteht darin, sämtliche notwendigen Ventilfunktionen mit einem einzigen Kombiventil zu erfüllen, das in verschiedene Ventilstellungen umschaltbar ist. Ein solches Kombiventil lässt sich mit nur einem beweglichen Teil verwirklichen, so dass sich bei einer Vielzahl von Brennern bzw. Brennerlanzen eine stark reduzierte Anzahl von beweglichen Teilen und damit eine massgeblich verringerte Störanfälligkeit ergibt.

Bei der erfindungsgemässen Anordnung sind in der dritten Ventilstellung die Brennstoffzuleitung und die Wasserzuleitung gleichzeitig mit der Brennkammerzuleitung verbunden, so dass Brennstoff und Wasser zur Brennkammer geführt werden. Ist die dritte Ventilstellung fest, stellt sich ein Mischungsverhältnis zwischen Brennstoff und Wasser ein, dass dadurch verändert werden kann, dass in wenigstens eine der Zuleitungen ein weiteres Ventil eingebaut wird. Um den Einsatz eines weiteren Ventils zu vermeiden und die mit der Erfindung erreichbaren Vorteile voll zu wahren, ist gemäss einer ersten bevorzugten Ausführungsform der Erfindung innerhalb der dritten Ventilstellung durch eine Veränderung der Ventilstellung das Mischungsverhältnis zwischen Wasser und Brennstoff einstellbar. Damit kann mit demselben Kombiventil auch das Mischungsverhältnis von Brennstoff und Wasser eingestellt werden.

Eine zweite bevorzugte Ausführungsform der erfindungsgemässen Anordnung ist dadurch gekennzeichnet, dass eine sechste Ventilstellung vorgesehen ist, in welcher die Wasserzuleitung abgesperrt und gleichzeitig die Brennstoffzuleitung mit einem Lüftungsauslass verbunden ist. Hierdurch ist es ohne zusätzliche bewegliche Teile bzw. Ventile möglich, die Brennstoffzuleitung zu entlüften und vor dem eigentlichen Betriebsbeginn mit Brennstoff zu füllen.

Eine weitere bevorzugte Ausführungsform der Erfindung zeichnet sich dadurch aus, dass das Kombiventil als Drehventil ausgebildet ist, und jede der Ventilstellungen einem vorgegebenen Drehwinkel des Drehventils entspricht, dass das Kombiventil einen in einer Ventilbohrung um die Längsachse drehbar angeordneten Ventilkolben umfasst, dass im Ventilkolben in der Drehachse hintereinander Aussparungen bzw. Ausfräsungen angeordnet sind, welche jeweils eine um die Drehachse drehbare Ventilkammer bilden, und dass die Brennkammerzuleitung, die Brennstoffzuleitung und die Wasserzuleitung an die Ventilbohrung auf der Höhe jeweils einer der Ventilkammern angeschlossen sind. Einziges bewegliches Teil des Drehventils ist der Drehkolben. Durch die spezielle Ausgestaltung des Drehkolbens ergibt sich ein sehr einfacher Aufbau des Ventils und eine hohe Funktionssicherheit.

Besonders günstig ist es, wenn gemäss einer bevorzugten Weiterbildung dieser Ausführungsform der Ventilkolben zwei Aussparungen bzw. Ausfräsungen aufweist, welche jeweils eine Ventilkammer mit einem halbkreisförmigen Querschnitt bilden, wenn die beiden Ventilkammern bezüglich der Drehachse um 180° verdreht angeordnet sind, wenn die Brennstoffzuleitung und die Wasserzuleitung parallel zueinander und in Richtung der Drehachse hintereinander in die Ventilbohrung einmünden, wobei die Brennstoffzuleitung bei geeigneter Drehstellung des Ventilkolbens in die erste Ventilkammer mündet, und die Wasserzuleitung bei geeigneter Drehstellung des Ventilkolbens in die zweite Ventilkammer einmündet, wenn im Bereich der ersten Ventilkammer von der Ventilbohrung quer zur Brennstoffzuleitung ein erster Brennkammerauslass abgeht, wenn im Bereich der zweiten Ventilkammer von der Ventilbohrung in entgegengesetzter Richtung zum ersten Brennkammerauslass ein zweiter Brennkammerauslass abgeht, wenn die beiden Brennkammerauslässe an die Brennkammerzuleitung angeschlossen sind, und wenn im Bereich der zweiten Ventilkammer von der Ventilbohrung in entgegengesetzter Richtung zum zweiten Brennkammerauslass ein weiterer Auslass abgeht, welcher über eine Verbindungsleitung mit einer Abzweigung der Brennstoffzuleitung verbunden ist.

Grundsätzlich können für die Betätigung des Drehventils unterschiedliche Antriebe verwendet werden; die einzelnen Drehstellungen bzw. Ventilstellungen können dann durch entsprechende Rastmechanismen definiert werden. Besonders einfach und vorteilhaft ist es jedoch, wenn gemäss einer anderen bevorzugten Ausführungsform zum Betätigen des Kombiventils bzw. Drehventils ein Schrittmotor vorgesehen ist, mit dem gleichzeitig das Ventil verdreht und bestimmte vorgegebene Drehstellungen sicher angesteuert werden können.

Besonders platzsparend ist es, wenn gemäss einer weiteren bevorzugten Ausführungsform die Brennkammerzuleitung innerhalb einer Brennerlanze in die Brennkammer geführt wird, die Brennerlanze an ihrem der Brennkammer abgewandten Ende einen Lanzenkopf aufweist, und das Kombiventil im Lanzenkopf untergebracht ist.

Weitere Ausführungsformen ergeben sich aus den abhängigen Ansprüchen.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1: in einer vereinfachten perspektivischen Darstellung ein bevorzugtes Ausführungsbeispiel für ein in einem Lanzenkopf untergebrachtes Kombiventil nach der Erfindung, wobei die einzelnen Leitungsverbindungen innerhalb des Kombiventils aus gründen der Uebersichtlichkeit weggelassen sind;
- Fig. 2: in schematisierter perspektivischer Darstellung, welche die Querschnitte in der Mittelebene der beiden Ventilkammern zeigt, die verschiedenen zum Ventil gehörigen Leitungsanschlüsse undverbindungen; und
- Fig. 3-8: jeweils in einer zu Fig.2 analogen Darstellung sechs verschiedene Ventilstellungen, welche unterschiedliche Ventilfunktionen erfüllen.

### WEGE ZUR AUSFÜHRUNG DER ERFINDUNG

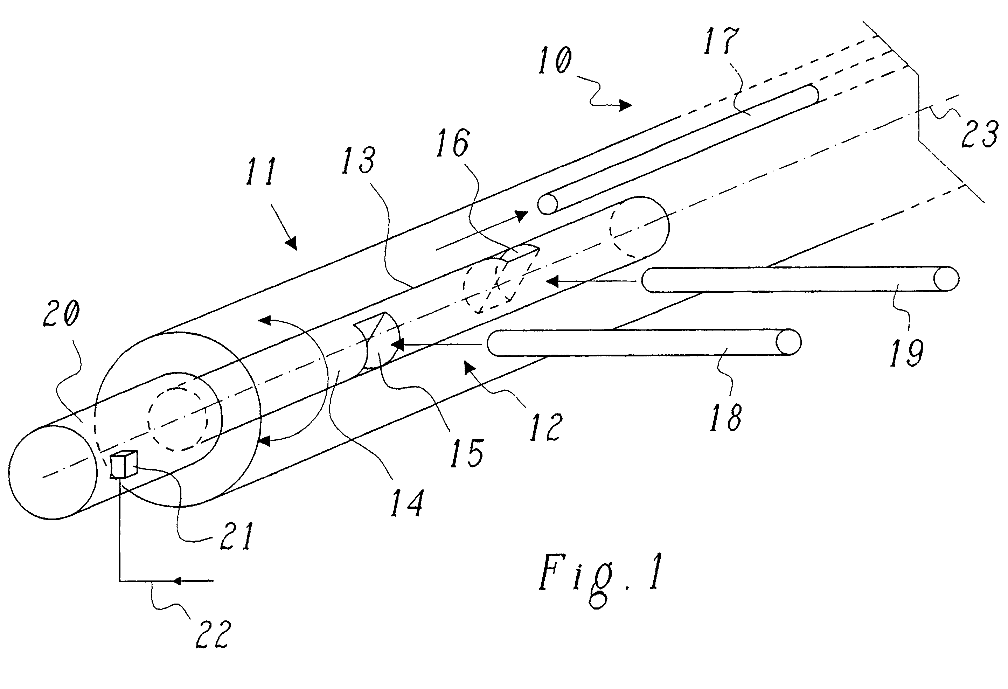

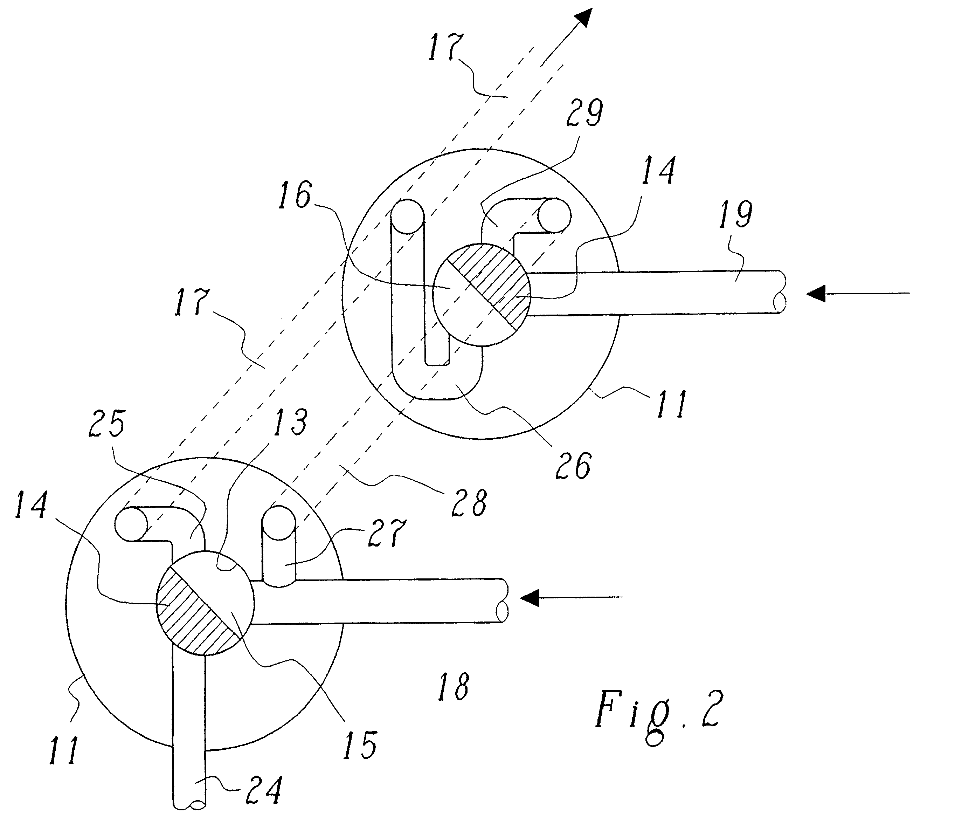

In Fig. 1 ist in einer vereinfachten perspektivischen Darstellung ein bevorzugtes Ausführungsbeispiel für ein in einem Lanzenkopf einer Brennerlanze untergebrachtes Kombiventil nach der Erfindung wiedergegeben. Die Brennerlanze 10 erstreckt sich entlang einer Lanzenachse 23 von einem ausserhalb der Brennkammer befindlichen Lanzenkopf 11 bis in den in der Brennkammer angeordneten Brenner (beide sind in Fig. 1 nicht gezeigt). Der flüssige Brennstoff (Oel bzw. Naphta) wird in einer Brennstoffzuleitung 18 an die Brennerlanze 10 herangeführt. Das Wasser wird entsprechend in einer Wasserzuleitung 19 herangeführt. Brennstoff undloder Wasser werden durch ein im Lanzenkopf 11 untergebrachtes Kombiventil 12 je nach Ventilstellung wahlweise in eine Brennkammerzuleitung 17 eingeleitet, die in der Brennerlanze 10 parallel zur Lanzenachse 23 zur (nicht gezeigten) Lanzenspitze hin verläuft. Die Richtung der Flüssigkeitsströme im Bereich des Ventils ist in Fig. 1 durch Pfeile symbolisiert. Die für die Ventilfunktion wichtigen Leitungsverbindungen und -anschlüsse innerhalb des Kombiventils 12 sind in Fig. 1 aus Gründen der Uebersichtlichkeit nicht eingezeichnet und werden im Zusammenhang mit der schematisierten Darstellung aus Fig. 2 nachfolgend näher erläutert.

Wesentlich für die Funktion des Kombiventils 12 ist ein zylindrischer Ventilkolben 14, der (um die Lanzenachse 23) drehbar in einer entsprechenden Ventilbohrung 13 im Lanzenkopf 11 angeordnet ist. Zur Abdichtung des Ventilkolbens 14 in der Ventilbohrung 13 können Dichtungsmittel wie z.B. O-Ringe oder dgl. vorgesehen sein. Auf eine Darstellung derartiger Dichtungsmittel ist aus Gründen der Einfachheit aber verzichtet worden. Im Ventilkolben 14 sind in der Drehachse hintereinander Aussparungen bzw. Ausfräsungen angeordnet sind, welche jeweils eine um die Drehachse 23 drehbare Ventilkammer 15, 16 mit einem halbkreisförmigen Querschnitt bilden. Die beiden Ventilkammern 15, 16 sind bezüglich der Drehachse 23 um 180° verdreht angeordnet. Die Brennstoffzuleitung 18 und die Wasserzuleitung 19 münden parallel zueinander und in Richtung der Drehachse 23 hintereinander in die Ventilbohrung 14 ein, wobei die Brennstoffzuleitung 18 bei geeigneter Drehstellung des Ventilkolbens 14 (wie in Fig. 1 gezeigt) in die erste Ventilkammer 15 einmündet, und die Wasserzuleitung 19 bei geeigneter Drehstellung des Ventilkolbens 14 (entgegengesetzt zum in Fig. 1 dargestellten Fall) in die zweite Ventilkammer 16 einmündet. Die Brennkammerzuleitung 17 ist auf der Höhe beider Ventilkammern 15, 16 an die Ventilbohrung 13 angeschlossen. Der Ventilkolben 14 kann um die Drehachse 23 um 360° in verschiedene Ventilstellungen gedreht werden. Zur Betätigung des Ventilkolbens ist ein in der Drehachse 23 sitzender Schrittmotor 20 vorgesehen, der über eine Steuerschaltung 21 angesteuert wird und seine Steuersignale über eine Signalleitung 22 erhält.

Die für die Ventilfunktion wichtigen und in Fig. 1 weggelassenen Leitungsanschlüsse und -verbindungen innerhalb des Kombiventils 12 sind aus der schematisierten (perspektivischen) Darstellung in Fig. 2 ersichtlich. Der untere (vordere) Teil der Fig. 2 zeigt den Querschnitt durch den Lanzenkopf 11 aus Fig. 1 in der durch die Ventilkammer 15 gehenden Mittelebene. Der obere (hintere) Teil der Fig. 2 zeigt entsprechend den Querschnitt in der durch die zweite Ventilkammer 16 gehenden Mittelebene. Die Brennstoffzuleitung 18 mündet von rechts kommend in die Ventilbohrung 13 bzw. die erste Ventilkammer 15. Die dahinter verlaufende Wasserzuleitung 19 mündet im Bereich der zweiten Ventilkammer 16 in die Ventilbohrung 13, ist aber in der in Fig. 2 dargestellten Ventilstellung durch den (schraffierten) Ventilkolben 14 verschlossen.

Quer zur Brennstoffzuleitung 18 geht von der Ventilbohrung 13 im Bereich der ersten Ventilkammer 15 nach oben ein erster Brennkammerauslass 25 ab, der an die zum Brenner führende (gestrichelt eingezeichnete) Brennkammerzuleitung 17 angeschlossen ist. Der erste Brennkammerauslass 25 ist leicht nach links versetzt angeordnet, so dass er bei einer Ventilstellung, bei welcher der Boden der ersten Ventilkammer 15 senkrecht steht und die erste Ventilkammer 15 zur Brennstoffzuleitung 18 hin offen ist, durch den Ventilkolben 14 verschlossen ist. Des weiteren geht quer zur Brennstoffzuleitung 18 nach unten ein Lüftungsauslass 24 von der Ventilbohrung 13 ab. Der Lüftungsauslass 24 ist leicht nach links versetzt angeordnet, so dass er bei einer Ventilstellung, bei welcher der Boden der ersten Ventilkammer 15 senkrecht steht und die erste Ventilkammer 15 zur Brennstoffzuleitung 18 hin offen ist, durch den Ventilkolben 14 verschlossen ist.

Quer zur Wasserzuleitung 19 geht von der Ventilbohrung 13 im Bereich der zweiten Ventilkammer 16 nach unten ein zweiter Brennkammerauslass 26 ab, der ebenfalls an die Brennkammerzuleitung 17 angeschlossen ist. Der zweite Brennkammerauslass 26 ist ebenfalls leicht nach links versetzt angeordnet, so dass er bei einer Ventilstellung, bei welcher der Boden der zweiten Ventilkammer 16 senkrecht steht und die zweite Ventilkammer 16 zur Wasserzuleitung 18 hin offen ist, durch den Ventilkolben 14 verschlossen ist. Weiterhin geht zur Wasserzuleitung 19 von der Ventilbohrung 13 im Bereich der zweiten Ventilkammer 16 nach oben ein Auslass 29 ab, der über eine (gestrichelt eingezeichnete) Verbindungsleitung 28 an eine Abzweigung 27 von der Brennstoffzuleitung 18 angeschlossen ist. Der Auslass 29 ist leicht nach rechts versetzt angeordnet, so dass er bei einer Ventilstellung, bei welcher der Boden der zweiten Ventilkammer 16 senkrecht steht und die Wasserzuleitung 18 verschlossen ist, durch den Ventilkolben 14 ebenfalls verschlossen ist.

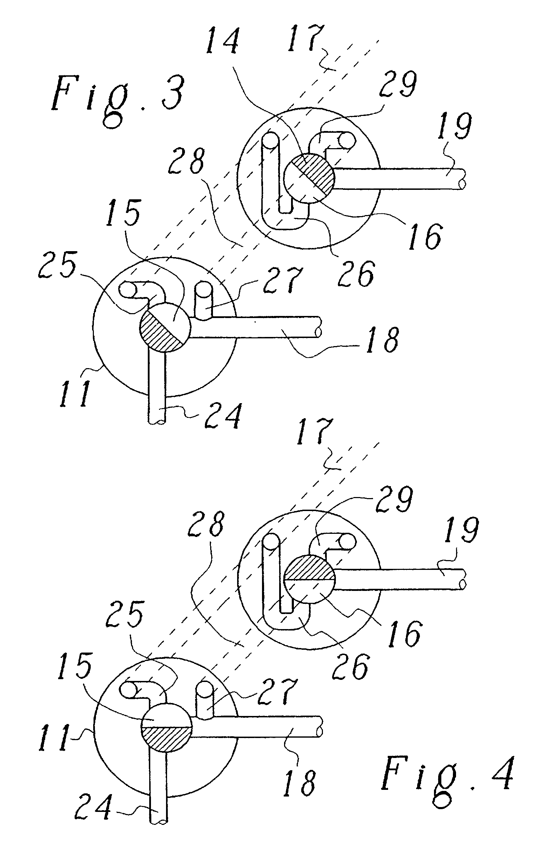

Mit der beschriebenen Konfiguration des Kombiventils 12 lassen sich nun mittels geeigneter Ventilstellungen (Drehstellungen) alle notwendigen Ventilfunktionen für die Brennerlanze realisieren. Die verschiedenen Ventilstellungen sind in den Figuren 3-8 dargestellt und die zugehörigen Ventilfunktionen sollen nachfolgend erläutert werden:
In der in Fig. 3 gezeigten Ventilstellung, die der Ventilstellung aus Fig. 2 entspricht, ist die Brennstoffzuleitung 18 über die erste Ventilkammer 15 voll mit der Brennkammerzuleitung 17 verbunden. Die Wasserzuleitung 19 dagegen ist verschlossen. Dasselbe gilt für den Auslass 29 bzw. die Verbindungsleitung 28. In dieser Ventilstellung wird also ausschliesslich flüssiger Brennstoff in die Brennkammer eingedüst.

In der in Fig. 4 gezeigten Ventilstellung, die sich aus der Ventilstellung der Fig. 3 durch Drehung des Ventilkolbens um 45° entgegen dem Uhrzeigersinn ergibt, sind sowohl der Lüftungsauslass 24 als auch der Auslass 29 zur Verbindungsleitung 28 verschlossen. Teilweise geöffnet sind dagegen sowohl die Brennstoffzuleitung 18 als auch die Wasserzuleitung 19, d.h. sowohl Brennstoff als auch Wasser strömen über die Ventilkammern 15 bzw. 16 in die Brennkammerzuleitung 17 ein. Das Mischungsverhältnis von Brennstoff zu Wasser bestimmt sich dabei nach der Feineinstellung des Ventilkolbens 14. In der in Fig. 4 gezeigten Stellung strömen Brennstoff und Wasser zu gleichen Teilen in die Brennkammerzuleitung ein. Wir der Ventilkolben dagegen im Uhrzeigersinn verdreht, wird der Durchgang von der Wasserzuleitung 19 stärker gedrosselt, während der Durchgang von der Brennstoffzuleitung 18 stärker geöffnet wird. Damit erhöht sich der Brennstoffanteil in der Brennstoff/Wasser-Mischung. Bei einer Verstellung des Ventilkolbens 14 entgegen dem Uhrzeigersinn ändert sich das Mischungsverhältnis entgegengesetzt. Die genaue Einstellung des Mischungsverhältnisses wird dabei durch die präzise Verstellbarkeit mittels des Schrittmotors 20 ermöglicht.

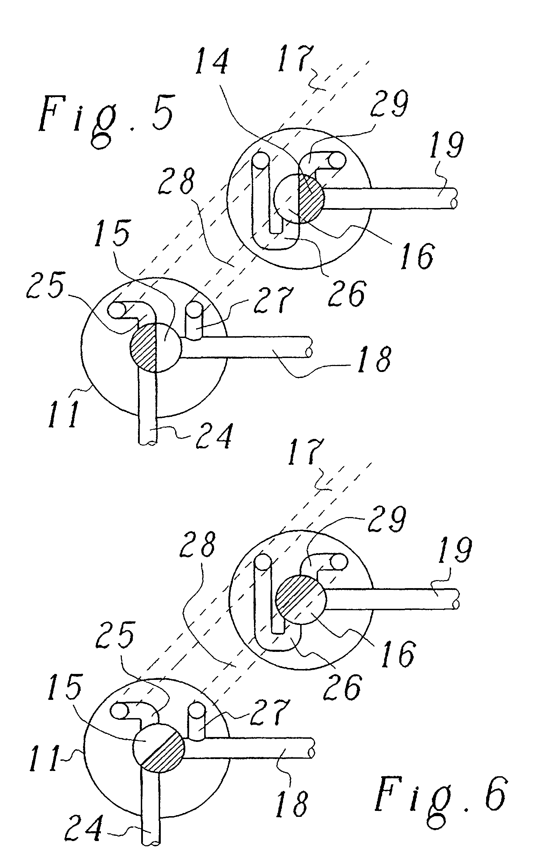

In der in Fig. 5 gezeigten Ventilstellung, die sich aus der Ventilstellung gemäss Fig. 3 durch eine Verdrehung des Ventilkolbens 14 um 45° im Uhrzeigersinn ergibt, sind die Wasserzuleitung 19 und der Auslass 29 verschlossen. Desgleichen ist die Verbindung von der Brennstoffzuleitung 18 zum ersten Brennkammerauslass 25 und zum Lüftungsauslass 24 hin unterbrochen. Diese Ventilstellung gilt bei abgeschaltetem Brenner: Die Brennkammerzuleitung 17, die Brennstoffzuleitung 18 und die Wasserzuleitung 19 sind für sich genommen unterbrochen bzw. verschlossen.

In der in Fig. 6 gezeigten Ventilstellung, die sich aus der Ventilstellung gemäss Fig. 4 durch ein Verdrehen des Ventilkolbens 14 um 45° entgegen dem Uhrzeigersinn ergibt, ist nur die Wasserzuleitung 19 über die zweite Ventilkammer 16 mit der Brennkammerzuleitung 17 voll verbunden. Alle übrigen Verbindungen sind unterbrochen. In dieser Ventilstellung kann die Brennerlanze 10 bis zum brennerseitigen Auslass mit Wasser durchgespült werden, um Reste des Brennstoffes zu entfernen.

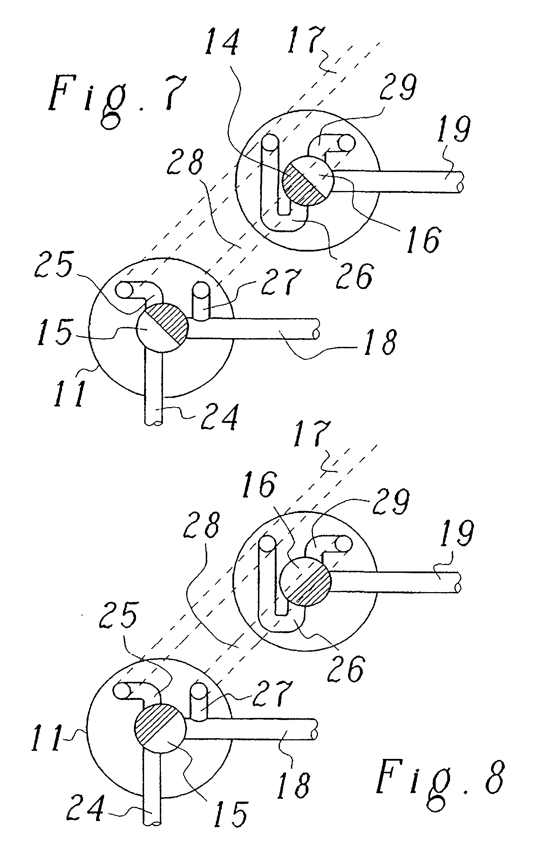

In der in Fig. 7 gezeigten Ventilstellung, die sich aus der Ventilstellung gemäss Fig. 3 durch ein Verdrehen des Ventilkolbens 14 um 180° ergibt, ist die Brennkammerzuleitung 17 verschlossen. Dagegen ist die Wasserzuleitung 19 über den Auslass 29 und die Verbindungsleitung 28 mit der Brennstoffzuleitung 18 verbunden. In dieser Ventilstellung kann die (ringförmige) Brennstoffzuleitung 18 rückwärts mit Wasser aus der Wasserzuleitung 19 gespült und gereinigt werden.

In der in Fig. 8 gezeigten Ventilstellung schliesslich, die sich aus der Ventilstellung gemäss Fig. 6 durch ein Verdrehen des Ventilkolbens 14 um 180° ergibt, sind die Brennkammerzuleitung 17 und die Wasserzuleitung 19 verschlossen, während die Brennstoffzuleitung 18 über die erste Ventilkammer 15 mit dem Lüftungsauslass 24 verbunden ist. In dieser Ventilstellung kann die Brennstoffzuleitung 18 mit Brennstoff gefüllt und gleichzeitig entlüftet werden, so dass das Brennstoffverteilsystem zu Beginn des Betriebes bereits vollständig mit Brennstoff gefüllt ist.

Insgesamt ergibt sich mit der Erfindung eine Anordnung zum wahlweisen Einleiten von Brennstoff und/oder Wasser in eine Brennkammer, welche folgende Vorteile aufweist:
- durch ein Kombiventil mit nur einem beweglichen Teil (dem Ventilkolben) werden auf einfache und betriebssichere Weise durch wenigstens sechs verschiedene Ventilstellungen sechs verschiedene Ventilfunktionen realisiert, die für den Betrieb der Anordnung wichtig sind
- durch einen positionsgenauen Ventilantrieb (z.B. Schrittmotor) kann in einer Ventilstellung zugleich eine Einstellung des Mischungsverhältnisses von Brennstoff zu Wasser vorgenommen werden
- die Einstellung des Mischungsverhältnisses kann auf diese Weise pro Brenner bzw. Brennerlanze einzeln erfolgen
- das Kombiventil mit dem Antrieb kann auf einfache und platzsparende Weise direkt in den Kopf einer Brennerlanze integriert werden.

### BEZUGSZEICHENLISTE

- 10: Brennerlanze
- 11: Lanzenkopf
- 12: Kombiventil
- 13: Ventilbohrung
- 14: Ventilkolben
- 15,16: Ventilkammer
- 17: Brennkammerzuleitung
- 18: Brennstoffzuleitung
- 19: Wasserzuleitung
- 20: Schrittmotor
- 21: Steuerschaltung
- 22: Signalleitung
- 23: Lanzenachse
- 24: Lüftungsauslass
- 25,26: Brennkammerauslass
- 27: Abzweigung (Brennstoffzuleitung)
- 28: Verbindungsleitung
- 29: Auslass (Verbindungsleitung)

## Patentansprüche

1. Anordnung zum wahlweisen Einleiten von Brennstoff und/oder Wasser in eine Brennkammer, insbesondere die Brennkammer einer Gasturbine, welche Anordnung Ventilmittel umfasst, mittels derer eine Brennstoffzuleitung (18) für den Brennstoff und eine Wasserzuleitung (19) für das Wasser wahlweise mit einer zur Brennkammer führenden gemeinsamen Brennkammerzuleitung (17) verbindbar sind, oder die Brennstoffzuleitung (18) und die Wasserzuleitung (19) zur Spülung des Zuleitungssystems untereinander verbindbar sind, oder die Brennstoffzuleitung (18) und die Wasserzuleitung (19) einzeln absperrbar sind, wobei die Ventilmittel ein Kombiventil (12) umfassen, welches in wenigstens fünf verschiedene Ventilstellungen umschaltbar ist, wobei in der ersten Ventilstellung allein die Brennstoffzuleitung (18) mit der Brennkammerzuleitung (17) verbunden ist, in der zweiten Ventilstellung allein die Wasserzuleitung (19) mit der Brennkammerzuleitung (17) verbunden ist, in der dritten Ventilstellung die Brennstoffzuleitung (18) und die Wasserzuleitung (19) gleichzeitig mit der Brennkammerzuleitung (17) verbunden sind, in der vierten Ventilstellung die Brennstoffzuleitung (18) und die Wasserzuleitung (19) untereinander verbunden und von der Brennkammerzuleitung (17) getrennt sind, und in der fünften Ventilstellung die Brennstoffzuleitung (18) und die Wasserzuleitung (19) einzeln abgesperrt sind.

2. Anordnung nach Anspruch 1, **dadurch gekennzeichnet, dass** innerhalb der dritten Ventilstellung durch eine Veränderung der Ventilstellung das Mischungsverhältnis zwischen Wasser und Brennstoff einstellbar ist.

3. Anordnung nach einem der Ansprüche 1 und 2, **dadurch gekennzeichnet, dass** eine sechste Ventilstellung vorgesehen ist, in welcher die Wasserzuleitung (19) abgesperrt und gleichzeitig die Brennstoffzuleitung (18) mit einem Lüftungsauslass (24) verbunden ist.

4. Anordnung nach einem der Ansprüche 1 bis 3, **dadurch gekennzeichnet, dass** das Kombiventil (12) als Drehventil ausgebildet ist, und jede der Ventilstellungen einem vorgegebenen Drehwinkel des Drehventils entspricht.

5. Anordnung nach Anspruch 4, **dadurch gekennzeichnet, dass** das Kombiventil (12) einen in einer Ventilbohrung (13) um die Längsachse drehbar angeordneten Ventilkolben (14) umfasst, dass im Ventilkolben (14) in der Drehachse hintereinander Aussparungen bzw. Ausfräsungen angeordnet sind, welche jeweils eine um die Drehachse drehbare Ventilkammer (15, 16) bilden, und dass die Brennkammerzuleitung (17), die Brennstoffzuleitung (18) und die Wasserzuleitung (19) an die Ventilbohrung (13) auf der Höhe jeweils einer der Ventilkammern (15, 16) angeschlossen sind.

6. Anordnung nach Anspruch 5, **dadurch gekennzeichnet, dass** der Ventilkolben (14) zwei Aussparungen bzw. Ausfräsungen aufweist, welche jeweils eine Ventilkammer (15, 16) mit einem halbkreisförmigen Querschnitt bilden, dass die beiden Ventilkammern (15, 16) bezüglich der Drehachse um 180° verdreht angeordnet sind, dass die Brennstoffzuleitung (18) und die Wasserzuleitung (19) parallel zueinander und in Richtung der Drehachse hintereinander in die Ventilbohrung (14) einmünden, wobei die Brennstoffzuleitung (18) bei geeigneter Drehstellung des Ventilkolbens (14) in die erste Ventilkammer (15) mündet, und die Wasserzuleitung (19) bei geeigneter Drehstellung des Ventilkolbens (14) in die zweite Ventilkammer (16) einmündet, dass im Bereich der ersten Ventilkammer (15) von der Ventilbohrung (14) quer zur Brennstoffzuleitung (18) ein erster Brennkammerauslass (25) abgeht, dass im Bereich der zweiten Ventilkammer (16) von der Ventilbohrung (14) in entgegengesetzter Richtung zum ersten Brennkammerauslass (25) ein zweiter Brennkammerauslass (26) abgeht, dass die beiden Brennkammerauslässe (25, 26) an die Brennkammerzuleitung (17) angeschlossen sind, und dass im Bereich der zweiten Ventilkammer (16) von der Ventilbohrung (14) in entgegengesetzter Richtung zum zweiten Brennkammerauslass (25) ein weiterer Auslass (29) abgeht, welcher über eine Verbindungsleitung (28) mit einer Abzweigung (27) der Brennstoffzuleitung (18) verbunden ist.

7. Anordnung nach Anspruch 6, **dadurch gekennzeichnet, dass** im Bereich der ersten Ventilkammer (15) von der Ventilbohrung (14) in entgegengesetzter Richtung zum ersten Brennkammerauslass (25) ein Lüftungsauslass (24) abgeht,

8. Anordnung nach einem der Ansprüche 4 bis 7, **dadurch gekennzeichnet, dass** zum Betätigen des Kombiventils (12) bzw. Drehventils ein Schrittmotor (20) vorgesehen ist.

9. Anordnung nach einem der Ansprüche 1 bis 8, **dadurch gekennzeichnet, dass** die Brennkammerzuleitung (17) innerhalb einer Brennerlanze (10) in die Brennkammer geführt wird, dass die Brennerlanze (10) an ihrem der Brennkammer abgewandten Ende einen Lanzenkopf (11) aufweist, und dass das Kombiventil (12) im Lanzenkopf (11) untergebracht ist.

10. Anordnung nach Anspruch 9, **dadurch gekennzeichnet, dass** das Kombiventil (12) als Drehventil ausgebildet ist, und dass die Drehachse des Drehventils parallel zur Lanzenachse (23) der Brennerlanze (10) liegt.

## Claims

1. Arrangement for the selective introduction of fuel and/or water into a combustion chamber, in particular the combustion chamber of a gas turbine, which arrangement comprises valve means, by which a fuel feed line (18) for the fuel and a water feed line (19) for the water can be selectively connected to a common combustion-chamber feed line (17) leading to the combustion chamber, or the fuel feed line (18) and the water feed line (19) can be connected to one another for flushing the feed-line system, or the fuel feed line (18) and the water feed line (19) can be shut off individually, the valve means comprising a combination valve (12), which can be shifted into at least five different valve positions, in which case only the fuel feed line (18) is connected to the combustion-chamber feed line (17) in the first valve position, only the water feed line (19) is connected to the combustion-chamber feed line (17) in the second valve position, the fuel feed line (18) and the water feed line (19) are connected simultaneously to the combustion-chamber feed line (17) in the third valve position, the fuel feed line (18) and the water feed line (19) are connected to one another and are separated from the combustion-chamber feed line (17) in the fourth valve position, and the fuel feed line (18) and the water feed line (19) are shut off individually in the fifth valve position.

2. Arrangement according to Claim 1, **characterized in that** the mixture ratio between water and fuel can be set within the third valve position by varying the valve position.

3. Arrangement according to either of Claims 1 and 2, **characterized in that** a sixth valve position, in which the water feed line (19) is shut off and the fuel feed line (18) is simultaneously connected to a vent outlet (24), is provided.

4. Arrangement according to one of Claims 1 to 3, **characterized in that** the combination valve (12) is designed as a rotary valve, and each of the valve positions corresponds to a predetermined rotary angle of the rotary valve.

5. Arrangement according to Claim 4, charaterized in that the combination valve (12) comprises a valve piston (14) arranged so as to rotate about the longitudinal axis in a valve bore (13), in that recesses or milled-out portions, which each form a valve chamber (15, 16) rotatable about the axis of rotation, are arranged one behind the other in the valve piston (14) in the axis of rotation, and in that the combustion-chamber feed line (17), the fuel feed line (18) and the water feed line (19) are connected to the valve bore (13) in each case at the level of one of the valve chambers (15, 16).

6. Arrangement according to Claim 5, **characterized in that** the valve piston (14) has two recesses or milled-out portions, which each form a valve chamber (15, 16) having a semicircular cross section, **in that** the two valve chambers (15, 16) are arranged rotated through 180° relative to the axis of rotation, **in that** the fuel feed line (18) and the water feed line (19) lead parallel to one another and one behind the other in the direction of the axis of rotation into the valve bore (14) [sic], the fuel feed line (18) leading into the first valve chamber (15) at a suitable rotary position of the valve piston (14), and the water feed line (19) leading into the second valve chamber (16) at a suitable rotary position of the valve piston (14), **in that** a first combustion-chamber outlet (25) branches off from the valve bore (14) [sic] transversely to the fuel feed line (18) in the region of the first valve chamber (15), **in that** a second combustion-chamber outlet (26) branches off from the valve bore (14) [sic] in the opposite direction to the first combustion-chamber outlet (25) in the region of the second valve chamber (16), **in that** the two combustion-chamber outlets (25, 26) are connected to the combustion-chamber feed line (17), and **in that** a further outlet (29) branches off from the valve bore (14) [sic] in the opposite direction to the second combustion-chamber outlet (25) [sic] in the region of the second valve chamber (16) and is connected to a branch (27) of the fuel feed line (18) via a connecting line (28).

7. Arrangement according to Claim 6, **characterized in that** a vent outlet (24) branches off from the valve bore (14) [sic] in the opposite direction to the first combustion-chamber outlet (25) in the region of the first valve chamber (15).

8. Arrangement according to one of Claims 4 to 7, **characterized in that** a stepping motor (20) is provided in order to actuate the combination valve (12) or rotary valve.

9. Arrangement according to one of Claims 1 to 8, **characterized in that** the combustion-chamber feed line (17) is directed inside a burner lance (10) into the combustion chamber, **in that** the burner lance (10) has a lance head (11) at its end remote from the combustion chamber, and **in that** the combination valve (12) is accommodated in the lance head (11).

10. Arrangement according to Claim 9, **characterized in that** the combination valve (12) is designed as a rotary valve, and **in that** the axis of rotation of the rotary valve is parallel to the lance axis (23) of the burner lance (10).

## Revendications

1. Agencement pour l'introduction sélective de combustible et/ou d'eau dans une chambre de combustion, en particulier la chambre de combustion d'une turbine à gaz, lequel agencement comprend des moyens de vanne au moyen desquels un conduit d'amenée de combustible (18), pour le combustible, et un conduit d'amenée d'eau (19), pour l'eau, peuvent être reliés sélectivement à un conduit commun (17) de chambre de combustion qui conduit à la chambre de combustion, ou le conduit d'amenée de combustible (18) et le conduit d'amenée d'eau (19) peuvent être reliés l'un à l'autre pour le rinçage du système de conduit d'amenée, ou le conduit d'amenée de combustible (18) et le conduit d'amenée d'eau (19) peuvent être fermés individuellement, les moyens de vanne comprenant une vanne combinée (12) qui peut être commandée en au moins cinq positions de vanne différentes, seul le conduit d'amenée de combustible (18) étant relié au conduit (17) de chambre de combustion lorsque la vanne se trouve dans la première position, seul le conduit d'amenée d'eau (19) étant relié au conduit (17) de chambre de combustion lorsque la vanne se trouve dans la deuxième position, le conduit d'amenée de combustible (18) et le conduit d'amenée d'eau (19) étant simultanément reliés au conduit (17) de chambre de combustion lorsque la vanne se trouve dans la troisième position, le conduit d'amenée de combustible (18) et le conduit d'amenée d'eau (19) étant reliés l'un à l'autre et séparés du conduit (17) de chambre de combustion lorsque la vanne se trouve dans la quatrième position et le conduit d'amenée de combustible (18) et le conduit d'amenée d'eau (19) étant fermés individuellement lorsque la vanne se trouve dans la cinquième position.

2. Agencement selon la revendication 1, **caractérisé en ce que** lorsque la vanne se trouve dans la troisième position, le rapport de mélange entre l'eau et le combustible peut être réglé par une modification de la position de la vanne.

3. Agencement selon l'une des revendications 1 et 2, **caractérisé en ce qu'**est prévue une sixième position de vanne dans laquelle le conduit d'amenée d'eau (19) est fermé et en même temps le conduit d'amenée de combustible (18) est relié à une sortie d'évent (24).

4. Agencement selon l'une des revendications 1 à 3, **caractérisé en ce que** la vanne combinée (12) est configurée comme vanne rotative, chacune des positions de vanne correspondant à un angle de rotation prédéterminé de la vanne rotative.

5. Agencement selon la revendication 4, **caractérisé en ce que** la vanne combinée (12) comprend un piston de vanne (14) disposé dans un alésage de vanne (13) à rotation autour de l'axe longitudinal, **en ce que** des découpes ou évidements qui forment chaque fois une chambre de vanne (15, 16) apte à tourner autour de l'axe de rotation sont disposés dans le piston de vanne (14) l'un derrière l'autre dans le sens de l'axe de rotation, et **en ce que** le conduit (17) de chambre de combustion, le conduit d'amenée de combustible (18) et le conduit d'amenée d'eau (19) sont raccordés à l'alésage de vanne (13) à la hauteur de la chambre de vanne (15, 16) respective.

6. Agencement selon la revendication 5, **caractérisé en ce que** le piston de vanne (14) présente deux découpes ou évidements qui forment chaque fois une chambre de vanne (15, 16) de section transversale semi-circulaire, **en ce que** les deux chambres de vanne (15, 16) sont disposées à un décalage de 180° autour de l'axe de rotation, **en ce que** le conduit d'amenée de combustible (18) et le conduit d'amenée d'eau (19) débouchent dans l'alésage de vanne (14) parallèlement l'un à l'autre et l'un derrière l'autre dans la direction de l'axe de rotation, le conduit d'amenée de combustible (18) débouchant dans la première chambre de vanne (15) lorsque le piston de vanne (14) se trouve dans une position de rotation appropriée et le conduit d'amenée d'eau (19) débouchant dans la deuxième chambre de vanne (16) lorsque le piston de vanne (14) se trouve dans une position de rotation appropriée, **en ce que** dans la région de la première chambre de vanne (15), une première sortie (25) vers la chambre de combustion part de l'alésage de vanne (14) transversalement par rapport au conduit d'amenée de combustible (18), **en ce que** dans la région de la deuxième chambre de vanne (16), une deuxième sortie (26) vers la chambre de combustion part dans le sens opposé de l'alésage de vanne (14) en direction de la première sortie (25) vers la chambre de combustion, **en ce que** les deux sorties (25, 26) vers la chambre de combustion sont raccordées au conduit (17) de chambre de combustion et **en ce que** dans la région de la deuxième chambre de vanne (16), une deuxième sortie (29) qui est reliée par un conduit de liaison (28) à une dérivation (27) du conduit d'amenée de combustible (18) part dans le sens opposé de l'alésage de vanne (14) en direction de la deuxième sortie (25) vers la chambre de combustion.

7. Agencement selon la revendication 6, **caractérisé en ce que** dans la région de la première chambre de vanne (15), une sortie d'évent (24) part dans le sens opposé de l'alésage de vanne (13) en direction de la première sortie (25) vers la chambre de combustion.

8. Agencement selon l'une des revendications 4 à 7, **caractérisé en ce qu'**un moteur pas-à-pas (20) est prévu pour l'actionnement de la vanne combinée (12) ou de la vanne rotative.

9. Agencement selon l'une des revendications 1 à 8, **caractérisé en ce que** le conduit (17) de chambre de combustion est amené de la chambre de combustion à l'intérieur d'une lance de brûleur (10), **en ce que** la lance de brûleur (10) présente une tête de lance (11) à son extrémité non tournée vers la chambre de combustion et **en ce que** la vanne combinée (12) est installée dans la tête de lance (11).

10. Agencement selon la revendication 9, **caractérisé en ce que** la vanne combinée (12) est configurée comme vanne rotative, et **en ce que** l'axe de rotation de la vanne rotative est parallèle à l'axe (23) de la lance de brûleur (10).
